# EUROPÄISCHE PATENTSCHRIFT

(11) **EP 3 058 127 B1**
(45) Veröffentlichungstag und Bekanntmachung des Hinweises auf die Patenterteilung: **12.08.2020**
(21) Anmeldenummer: 14808815.6
(22) Anmeldetag: 15.10.2014
(51) Int. Cl.: D04H 1/492, D04H 1/495, D04H 3/007, D04H 3/11, D04H 5/03

(54) **VOLUMINÖSES VLIESKOMPOSIT UND VERFAHREN ZUR HERSTELLUNG DESSELBEN**
VOLUMINOUS NONWOVEN COMPOSITE AND METHOD FOR PRODUCING SAME
COMPOSITE NON-TISSÉ VOLUMINEUX ET PROCÉDÉ DE FABRICATION DE CELUI-CI

(30) Priorität: 18.10.2013 DE 102013111499
(43) Veröffentlichungstag der Anmeldung: 24.08.2016
(73) Patentinhaber: Mondi Ascania GmbH, 06449 Aschersleben (DE)
(72) Erfinder: STEINER, Ulrich, CH-8620 Wetzikon (CH); FAHMY, Tarek, 37647 Polle (DE); FLECK, Marko, 06449 Aschersleben (DE)
(74) Vertreter: Patentanwälte Thömen & Körner
(86) Internationale Anmeldenummer: PCT/DE2014/100363
(87) Internationale Veröffentlichungsnummer: WO 2015/055177

(56) Entgegenhaltungen:
- EP-A1- 1 275 764
- EP-A1- 1 576 222
- EP-A1- 1 706 527
- EP-A1- 2 116 645
- EP-A2- 0 751 249
- WO-A1-03/001962
- WO-A1-2008/147264
- JP-A- H05 209 353

## Beschreibung

Die Erfindung betrifft ein voluminöses Vlieskomposit umfassend eine erste Lage wirr abgelegter schmelzegesponnener Endlosfilamente und eine zweite Lage gekräuselter Stapelfasern sowie ein Verfahren zur Herstellung desselben.

Bei der Herstellung von Hygieneartikeln, beispielsweise von Babywindeln, kommen je nach Funktionalität verschiedene Vliesstoffe, die auch als Vliese oder Vliesmaterialien bezeichnet werden, zum Einsatz. Die Vliesstoffe können grundsätzlich in zwei Gruppen aufgeteilt werden, nämlich einerseits in die der dünnen Vliesstoffe und andererseits in die der voluminösen Vliesstoffe.

Bei den dünnen Vliesstoffen handelt es sich um solche mit einer Dicke von etwa 0,2 mm und einem Flächengewicht von etwa 10 bis 15 g/m², woraus sich eine Dichte von etwa 0,05 bis 0,075 g/cm³ ergibt. Die Porengröße solcher Vliese liegt in der Regel bei 50 µm. Dünne Vliesstoffe werden vorwiegend aus thermoplastischen, wirr abgelegten Endlosfasern hergestellt. In dem so genannten Spinnvliesverfahren werden solche Vliese meist aus Polypropylen hergestellt. Die extrudierten, in einem Luftstrom auf einem Siebband abgelegten Fasern werden durch eine Kalandrierung unter Hitze und Druck an diskreten Stellen miteinander verschmolzen. Dadurch erhält das Vlies seine Festigkeit und wird dabei auf seine endgültige Dicke komprimiert.

Dünne Vliese werden beispielsweise als Abdeckvlies des Saugkörpers einer Windel eingesetzt. Um den Durchtritt von Flüssigkeit zu beschleunigen, werden solche Vliese durch Auftrag eines Netzmittels hydrophiliert. Auch dünne Vliese, die den Saugkern selbst einhüllen, um ihm Stabilität zu verleihen, sind solchermaßen ausgerüstet.

Bei dem Einsatz als seitlichen Auslaufschutz ist eine Hydrophilierung dagegen unerwünscht. Üblicherweise wird in diesem Fall die flüssigkeitsabweisende Wirkung des Vlieses durch Einbringen von Feinstfasern mit Durchmessern im Mikrometer-Bereich (Meltblownfasern) erhöht, wodurch die Porengröße noch einmal abnimmt. Solche wasserabweisenden Vliese werden auch von außen auf die als Auslaufschutz dienende wasserdichte Folie aufgeklebt, um ihr einen textilen Griff zu vermitteln, so genanntes "Textile Backsheet".

Werden schwergewichtigere Vliese nach dem oben erwähnten Spinnvliesverfahren hergestellt, beispielsweise mit einer Reicofil-Anlage der Firma Reifenhäuser, so nimmt die Dicke nur wenig zu, da die Dichte des Vlieses im Kalandrierungsprozess zunimmt. Ein Vlies mit einem Flächengewicht von 45 g/m² hat beispielsweise eine Dicke von nur etwa 0,3 mm und eine Dichte von 0,15 g/cm³. Voluminöse, dickere Vliese mit Dichten unter 0,1 g/cm³ sind also durch Erhöhung des Flächengewichtes so nicht herstellbar. Sie werden jedoch für einen weiten Anwendungsbereich gebraucht.

Voluminöse Vliese, wie sie im Hygienebereich eingesetzt werden, sind solche mit einem Flächengewicht von 20 bis 60 g/m². Diese weisen bereits im vorgenannten niedrigen Flächengewichtsbereich eine Dicke von mehr als 0,3 mm auf. Die Dichte solcher Vliese liegt im gesamten vorgenannten Flächengewichtsbereich bei unter 0,1 g/cm³.

Entsprechend ihrer geringeren Dichte ist die durchschnittliche Porengröße solcher voluminöser Vliese größer als die dünner Vliese und beträgt üblicherweise mehr als 0,1 mm.

Solche voluminösen Vliese werden beispielsweise als Vlieslage zwischen einem Windelabdeckvlies und dem eigentlichen Saugkörper als so genannte "Aquisition Layer" eingesetzt. Flüssigkeit, die durch das Abdeckvlies tritt, wird in dem voluminösen Vlies zwischengespeichert, da der Saugkörper, der zum großen Teil aus superabsorbierendem Polymerpulver besteht, eine gewisse Zeit braucht, um seine Saugkapazität zu entfalten.

Ist der Saugkörper so konstruiert, dass er keine Partikel abgeben kann, beispielsweise durch Einhüllung mit einem dünnen Vlies, einem Papier oder durch Zusatz von Kleber, kann auf das äußere dünne Abdeckvlies vollkommen verzichtet werden und ein voluminöses Vlies direkt als so genanntes "Top Sheet" miteingesetzt werden. Es erfüllt dann gleichzeitig die Funktion des "Aquisition Layers".

In einer anderen Anwendung werden voluminöse Vliese auch als Teil eines Klettverschluss eingesetzt und bilden dort das Schlaufen aufweisende Gegenstück zum Haken aufweisenden Teil des Klettverschlusses. Das vorgenannte Gegenstück wird auch als "Landing Zone" bezeichnet. Die pilzförmigen Haken sind üblicherweise 0,3 - 0,5 mm lang, wobei deren verdickte Köpfchen mit einem Durchmesser von 0,2 - 0,35 mm beim Eintauchen in das voluminöse Vlies mit den Schlaufen bildenden Endlosfasern verhaken.

Bei der Anwendung als "Landing Zone" werden voluminöse Vliese oft mit einem Oberflächenrelief, beispielsweise Wellen in Längsrichtung, versehen. Das hat den Vorteil, dass sich die Haken bei Zugbelastung in Querrichtung, wie es bei Windelverschlüssen vorkommt, noch stärker im Vlies festsetzen.

Zur Herstellung voluminöser Vliese können Vliese aus gekräuselten Stapelfasern mit Hilfe von Wasserstrahlen vernadelt werden. Ein solches Vlies ist beispielsweise in US 3,493,462 offenbart und unter der Bezeichnung "Sontara" der Firma DuPont bekannt. Ein Nachteil eines solchen Vlieses besteht in der geringen Abriebfestigkeit und dem damit verbundenen leichten Herauslösen von Fasern, wodurch dieses Produkt für Anwendungen als "Landing Zone" eines Klettverschlusses ungeeignet ist.

Es wurde daher versucht, voluminöse Vliese aus Endlosfilamenten herzustellen, da diese eine hohe Festigkeit und gute Abriebeigenschaften aufweisen.

Zur Verfestigung der im Spinnvliesverfahren wirr abgelegten Endlosfilamente kommt aber keine Kalandrierung in Frage, da durch den Druck zwischen den heißen Stahlwalzen das Vlies zu stark komprimiert werden würde.

Stattdessen wird auch hier die Wasserstrahlverfestigung eingesetzt, da in diesem Prozess das Vliesvolumen erhalten bleibt und nur eine Verschlaufung der Filamente untereinander stattfindet.

Aus EP 2505707 A1 ist bekannt, dass der Grad der Verschlaufung und damit die Dichte eines Vlieses aus Endlosfilamenten durch die Variation des Druckes der Wasserstrahlen bei der Wasserstrahlvernadelung eingestellt werden kann und so ein Vlies erhalten werden kann, das sich als "Landing Zone" eines Klettverschlusses eignet. Nachteilig daran ist jedoch, dass bei der Variation der Prozessparameter sich auch die mechanischen Eigenschaften des Vlieses, beispielsweise die Reißkräfte, negativ ändern. Dies liegt insbesondere daran, dass Endlosfilamente an sich nur schwer untereinander zu verschlaufen sind.

Aus US 7,998,889 B2 ist bekannt, dass in einem Nasslegeprozess ungekräuselte Stapelfasern von bis zu 4 dtex einem Vlies aus wirren Endlosfilamenten von bis zu 4 dtex zugeführt werden, wobei dann durch Wasserstrahlvernadelung ein Vlies mit einer durchschnittliche Porengröße von 70 µm erhalten wird. Die maximale Porengröße liegt bei 150 µm und die Dichte solcher Vliese beträgt ca. 0,1 g/cm³. Durch die Anwendung ausschließlich relativ dicker, damit allerdings schwer zu vernadelnder Fasern soll ein großes Volumen erreicht werden.

US 2013/0104330 A1 offenbart einen zweiseitigen bzw. verschiedenseitigen Vliesstoff aus einer ersten Menge an Fasern, welche mit einer Bahn aus einer zweiten Menge an Fasern hydraulisch vernadelt ist, wobei der zweiseitige Vliesstoff eine erste Fläche aufweist, welche vorwiegend die erste Menge an Fasern, und eine gegenüberliegende zweite Fläche aufweist, welche vorwiegend die zweite Menge an Fasern umfasst. Nachteilig daran ist, dass bei Verwendung des Vliesstoffes in einem bzw. für ein Produkt, beispielsweise einer Windel, die Ausrichtung der Flächen bzw. der Unter- und Oberseite des Vliesstoffes festgelegt ist.

Weiterhin ist aus US 2002/0157766 A1 bzw. der zur Patentfamilie gehörenden DE 600 30 120 T2 bekannt, gekräuselte Stapelfasern mit einem Vlies aus Endlosfilamenten wasserstrahlzuvernadeln. Eine mechanische Vorkompaktierung des Komplexes aus gekräuselten Stapelfasern und Vlies aus Endlosfilamenten durch Kaltpressen soll hierbei eine sehr hohe Festigkeit sicherstellen, wobei die Stapelfasern eingesetzt werden, um einen textilen Griff zu erhalten. Dicke und Dichte des Vliesstoffes spielen keine Rolle. Der Vliesstoff soll zu den durch Kalandrierung mit Hitze verfestigten Spinnvliesen äquivalente mechanische Eigenschaften aufweisen.

WO 01/53590 A1 beschreibt ein Verfahren zur Herstellung eines Verbundvlieses aus zwei Bahnen, nämlich aus einer oberen Bahn und einer unteren Bahn, die vorzugsweise mittels Wasserstrahlverfestigung miteinander verbunden werden. Die obere Bahn ist eine Bahn aus kurzen ungekräuselten Cellulosefasern, welche mittels eines Nass- oder eines Luftlegeverfahren auf die untere Bahn aus schmelzegesponnenen Endlosfilamenten aufgebracht wird. Eine mechanische Vorkompaktierung nach Aufbringen der oberen auf die untere Bahn wird vorgeschlagen. Die Endlosfilamente weisen eine Feinheit von weniger als 1,6 dtex, vorzugsweise zwischen 0,55 und 1,3 dtex, auf. Das Flächengewicht der unteren Bahn beträgt weniger als 25 g/m². Da die eingesetzten Cellulosefasern ungekräuselt und zudem sehr kurz sind, entsteht insgesamt ein starkt verdichtetes Verbundvlies.

Einem Vlies kann in einem zusätzlichen Arbeitsschritt ein Relief eingeprägt werden, beispielsweise durch Verformung in entsprechenden Werkzeugen aus Walzenpaaren. Das für die Funktionalität wirksame Volumen kann dadurch noch mal erhöht werden, wie in der US 7,838,099 B2 offenbart.

EP 1 706 527 A1 offenbart ein Vlieskomposit, das aus einer ersten Lage von Endlosfilamenten und einer zweiten Lage aus Stapelfasern hergestellt wird, wobei die Lagen zur Ausbildung des Vlieskomposits beispielsweise durch Wasserstrahlen verfestigt werden. Die Feinheit der Endlosfilamente beträgt weniger als 6 Denier, in einigen Ausführungen vorzugsweise weniger als 3 Denier, in anderen Ausführungen etwa 0,5 Denier bis etwa 3 Denier. Die Stapelfasern haben eine Länge von etwa 0,3 mm bis etwa 25 mm, wobei vorteilhafte Ausführungen mit Stapelfaserlängen von etwa 0,5 mm bis etwa 8 mm und von etwa 3 mm bis etwa 8 mm genannt sind. Die Feinheit der Stapelfasern beträgt weniger als 6 Denier, in einigen Ausführungen vorzugsweise weniger als 3 Denier, in anderen Ausführungen etwa 0,5 Denier bis etwa 3 Denier.

Der Erfindung liegt die Aufgabe zugrunde, die oben genannten Nachteile zu beheben und auf einfache und wirtschaftliche Weise ein verbessertes voluminöses Vlieskomposit bereit- und herzustellen. Der Erfindung liegt außerdem die Aufgabe zugrunde, ein voluminöses Vlieskomposit bereit- und herzustellen, das ein Relief aufweist, welches auf einfache und wirtschaftliche Weise ausgebildet werden kann.

Diese Aufgabe wird bei einem voluminösen Vlieskomposit nach dem Oberbegriff des Anspruchs 1 durch die kennzeichnenden Merkmale des Anspruchs 1 sowie bei einem Verfahren zur Herstellung eines voluminösen Vlieskomposits durch die Merkmale des Anspruchs 13 gelöst. Weiterbildungen und vorteilhafte Ausgestaltungen der Erfindung ergeben sich aus den jeweiligen Unteransprüchen.

Das voluminöse Vlieskomposit, hergestellt aus einer ersten Lage wirr abgelegter schmelzegesponnener Endlosfilamente und einer zweiten Lage gekräuselter Stapelfasern, zeichnet sich erfindungsgemäß dadurch aus, dass
a) die Endlosfilamente eine Feinheit von 0,8 bis 1,8 dtex, vorzugsweise von ≤ 1,3 dtex, besonders bevorzugt von 1,0 bis 1,2 dtex aufweisen,
b) die gekräuselten Stapelfasern eine Feinheit von 2,2 bis 15 dtex, vorzugsweise von 4 bis 10 dtex aufweisen und
c) die Lagen zur Ausbildung des voluminösen Vlieskomposits ausschließlich durch Wasserstrahlen verfestigt und derart innig miteinander verbunden sind, dass die ursprüngliche mehrlagige Struktur verloren geht,
wobei das Vlieskomposit Poren mit einem Durchmesser von 0,2 mm bis 0,4 mm aufweist,
wobei die Messung der Porengröße mittels eines Siebtestgeräts AA200 control der Firma Retsch wie folgt durchgeführt wird:
- das Vlieskomposit wird eingespannt bzw. einem Sieb aufgelegt
- 5 g Glaskügelchen eines vorgegebenen Durchmessers werden auf das eingespannte Vlieskomposit gegeben
- das Vlieskomposit wird über einen Zeitraum von 3 min mit einer Schwingungsamplitude von 2 mm zum Schwingen gebracht
- anschließend wird geprüft, ob Glaskügelchen durch das Vlieskomposit gerieselt sind, wobei das Vlieskomposit Poren mit einer Porengröße aufweist, welche zumindest dem Durchmesser der Glaskügelchen entsprechen, wenn eine Menge von mindestens 1,5 % der Einwaage durch das Vlieskomposit hindurchtritt, wobei die größte Pore durch die größte durchgesiebte Glaskugel angezeigt wird.

Dadurch, dass die oben genannte mindestens eine Lage wirr abgelegter schmelzegesponnener dünner Endlosfilamente, also eine Lage eines Endlosfaservlieses mit großer Feinheit bzw. mit kleinem dtex, mit der oben genannten mindestens einen Lage kardierter, gekräuselter dicker Stapelfasern wasserstrahlverfestigt bzw. -vernadelt und innig verbunden ist, wird auf einfache und wirtschaftliche Weise ein verbessertes voluminöses Vlieskomposit erhalten und bereitgestellt.

Der dem Fachmann auf dem vorliegenden Anwendungsbereich sich ohne weiteres erschließende Begriff "innig" sollte dahingehend verstanden werden, dass die Verbindung der genannten Lagen in einem weitgehend homogenen Vlieskomposit bzw. Vliesmaterial resultiert. Mit anderen Worten sind die vor genannten Endlosfilamente und Stapelfasern nach der Wasserstrahlverfestigung derart miteinander verschlauft, dass die ursprüngliche mehrlagige Struktur verloren geht. Bei Verwendung des Vliesstoffes in einem bzw. für ein Produkt, beispielsweise in einer oder für eine Windel, ist die Ausrichtung der Flächen bzw. der Unter- und Oberseite des Vlieskomposits daher vorteilhaft gleichgültig. Eine Trennung des voluminösen Vlieskomposits in die ursprünglichen Lagen ist nicht möglich.

Die Feinheit von Endlosfilamenten und Stapelfasern stellt ein Maß für deren Dicke, Durchmesser oder Stärke dar. Je kleiner der Durchmesser eines solchen Gebildes ist, desto feiner ist es bzw. desto größer ist seine Feinheit. Die Feinheit kann als längenbezogene Masse angegeben werden. Solche Gewichtsnummerierungen geben das Verhältnis Masse bzw. Gewicht je Länge an, insbesondere nach dem in der ISO 1144 und DIN 60905, Teil 1: "Tex-System; Grundlagen" genannten Tex-System. Das Tex ist Einheit und Grundgröße des Tex-Systems. 1 tex entspricht 1 Gramm pro 1000 Meter. 1 dtex (Dezitex) entspricht 0,1 tex oder 1 Gramm pro 10.000 Meter bzw. 1 tex entspricht 10 dtex. Je höher die Tex-Nummer, umso gröber sind die Endlosfilamente bzw. Stapelfasern, d.h. umso größer ist deren Durchmesser.

Erfindungsgemäß wird der so genannte Titer (dtex) der Endlosfilamente und Stapelfasern nach DIN EN ISO 1973:1995-12 bestimmt, wobei zur Anwendung das darin genormte Vibroskop-Verfahren kommt. Mit diesem kann die Feinheit der einzelnen Fasern ermittelt werden, wenn sich diese durch eine aufgezwungene äußere Erregerfrequenz in ausreichende Schwingungen versetzen lassen. Da jede Faser eine feinheitsbedingte Eigenfrequenz besitzt, kann nach Ermittlung dieser die Faserfeinheit Tt in dtex errechnet werden.

Bei der Wasserstrahlverfestigung bzw. -vernadelung verschlaufen die dünnen Endlosfilamente der ersten Lage mit den an sich schwer zu vernadelnden Stapelfasern der zweiten Lage und es bildet sich ein innig miteinander verbundenes Vlieskomposit. Die Festigkeit wird durch die Endlosfilamente erreicht, wohingegen das Volumen von den dicken, eingebundenen gekräuselten Stapelfasern herrührt.

Es kann vorteilhaft sein, wenn die zweite Lage neben den einen gekräuselten Stapelfasern zusätzlich andere gekräuselte Stapelfasern mit einer Feinheit von 1,2 bis 2,1 dtex enthält, wobei die gekräuselten Stapelfasern aus einem Gemisch von 20 bis 99 Gew.-% der einen Stapelfasern und 1 bis 80 Gew.-% der anderen Stapelfasern bestehen.

Dadurch, dass den dicken Stapelfasern auch weniger dicke Stapelfasern zugemischt sind, wird eine noch bessere Einbindung der dicken Stapelfasern in das Vlieskomposit erreicht. Die weniger dicken Stapelfasern wirken als Verbindung zwischen den Endlosfilamenten und den dicken Stapelfasern, die dem Vlieskomposit durch ihre Steifheit und Kräuselung das nötige Volumen geben.

Es kann von Vorteil sein, wenn die Stapelfasern eine Länge von ≥ 2,5 cm, vorzugsweise bis 10 cm, besonders bevorzugt bis 5 cm aufweisen.

Es kann vorteilhaft sein, wenn die Dichte des Vlieskomposits ≤ 0,1 g/cm³, vorzugsweise 0,04 bis 0,1 g/cm³, beträgt.

Die Dichte des Vlieskomposits ergibt sich aus dem Flächengewicht des Vlieskomposits dividiert durch die Dicke des Vlieskomposits. Das Flächengewicht wird gemäß WSP 130.1 (09) bestimmt. Die Dicke wird gemäß WSP 120.1 (09) bestimmt.

Die Porengröße des Vlieskomposits wird mit dem Autoporosimeter der Firma TRI/Princeton bestimmt, sofern die Poren eine Porengröße < 200 µm aufweisen.

Sofern die Poren eine Porengröße ≥ 200 µm aufweisen, wird die Messung erfindungsgemäß wie folgt durchgeführt: In ein aktuelles Siebtestgerät AA200 control der Firma Retsch wird das Vlieskomposit eingespannt bzw. einem Sieb aufgelegt. Anschließend werden 5 g von Glaskügelchen eines vorgegebenen Durchmessers auf das eingespannte Vlieskomposit gegeben. Dann wird das Vlieskomposit über einen Zeitraum von 3 min mit einer Schwingungsamplitude von 2 mm zum Schwingen gebracht. Anschließend wird geprüft, ob Glaskügelchen durch das Vlieskomposit gerieselt sind. Tritt eine Menge von mindestens 1,5 %, vorzugsweise von mindestens 3 %, besonders bevorzugt von mindestens 5 % der Einwaage durch das Vlieskomposit hindurch, so weist dieses Poren mit einer Porengröße auf, welche zumindest dem Durchmesser der Glaskügelchen entsprechen. Die größte Pore wird durch die größte durchgesiebte Glaskugel angezeigt.

Es kann zweckmäßig sein, wenn das voluminöse Vlieskomposit mehr als 5, vorzugsweise mehr als 10 Poren pro cm² mit einem Durchmesser von ≥ 0,2 mm aufweist.

Es kann vorteilhaft sein, wenn das Vlieskomposit ein Flächengewicht von 18 bis 80 g/m² aufweist, wobei der Gewichtsanteil der Endlosfilamente vorzugsweise 10 bis 70 % beträgt und der Gewichtsanteil der gekräuselten Stapelfasern vorzugsweise 30 bis 90 % beträgt. Das Flächengewicht wird gemäß WSP 130.1 (09) bestimmt.

Es kann zweckmäßig sein, wenn das Vlieskomposit ein Relief mit diskreten erhabenen Stellen bzw. Bereichen aufweist, welche während der Wasserstrahlverfestigung einprägbar sind. Diese Einprägung wird vorteilhaft dadurch erreicht, dass bei der Wasserstrahlverfestigung bzw. Wasserstrahlvernadelung eine reliefierte Trommel eingesetzt wird, in deren Einbuchtungen sich das Vlieskomposit setzt und somit die Struktur der Trommel annimmt.

Für die Einprägung des Reliefs in das Vlieskomposit während der Wasserstrahlvernadelung bzw. -verfestigung können die zuvor genannten, in der zweiten Lage enthaltenen dünneren gekräuselten Stapelfasern mit einer Feinheit von 1,2 bis 2,1 dtex vorteilhaft sein. Da die dicken Stapelfasern im Wasserstrahl wenig beweglich sind, könnte sich das Relief nur undeutlich abzeichnen. Die dünneren Stapelfasern sind dagegen während der Wasserstrahlvernadelung viel leichter beweglich, wodurch sich das Relief im Vlieskomposit wesentlich deutlicher abbildet.

Es kann vorteilhaft sein, wenn das Vlieskomposit eine zusätzliche Prägung aufweist, die mittels Thermo- und/oder Ultraschallkalander, vorzugsweise nach der Wasserstrahlverfestigung, einbringbar ist.

Es kann zweckmäßig sein, wenn die Endlosfilamente und/oder die gekräuselten Stapelfasern in einem Inlineprozess der Wasserstrahlverfestigung zuführbar sind.

Es kann vorteilhaft sein, wenn die Lage aus Endlosfilamenten und/oder die Lage aus gekräuselten Stapelfasern leicht vorverfestigt sind. Entsprechend können die genannten Vlieslagen des erfindungsgemäßen Vlieskomposits in leicht vorverfestigtem Zustand der Wasserstrahlvernadelung zugeführt werden. Die Vorverfestigung, beispielsweise punktförmige Vorverprägung, ist dabei so leicht ausgeführt, dass sich die Fasern aus diesen leichten Verbindungs- bzw. Vorverfestigungspunkten während der Wasserstrahlvernadelung wieder herauslösen können.

Es kann vorteilhaft sein, wenn die Lage aus Endlosfilamenten und/oder die Lage aus gekräuselten Stapelfasern in einem Offlineprozess der Wasserstrahlverfestigung zuführbar sind.

Es kann zweckmäßig sein, wenn die leicht vorverfestigten Lagen getrennt voneinander herstellbar sind und dann der Wasserstrahlverfestigung zuführbar sind.

Es kann vorteilhaft sein, wenn mindestens eine zusätzliche Lage von Endlosfilamenten und/oder Stapelfasern der Wasserstrahlverfestigung zuführbar ist.

Es kann vorteilhaft sein, wenn die Endlosfilamente aus Monofilamenten oder Bikomponentenfilamenten aus Polypropylen, Polyethylen, Polyester, Polylactid oder deren Copolymere bestehen.

Es kann vorteilhaft sein, wenn die Stapelfasern aus Viskose oder Baumwolle oder aus monokomponentigen oder bikomponentigen Fasern aus Polypropylen, Polyethylen, Polyester, Polyamid, Polylactid oder deren Copolymere bestehen.

Es kann von Vorteil sein, wenn die einen gekräuselten Stapelfasern aus einem Material, vorzugsweise Polypropylen, und die anderen gekräuselten Stapelfasern aus einem sich davon unterscheidenden Material, vorzugsweise Polyester, bestehen.

Es kann zweckmäßig sein, wenn zumindest einige der Endlosfilamente und/oder zumindest einige der Stapelfasern einen nicht runden Querschnitt aufweisen und/oder hohl sind.

Die Erfindung betrifft zudem ein Verfahren zur Herstellung eines voluminösen Vlieskomposits, bei welchem eine erste Lage wirr abgelegter schmelzegesponnener Endlosfilamente, die eine Feinheit von 0,8 bis 1,8 dtex, vorzugsweise von ≤ 1,3 dtex, besonders bevorzugt von 1,0 bis 1,2 dtex aufweisen, mit einer zweiten Lage aus gekräuselten Stapelfasern, die eine Feinheit von 2,2 bis 15 dtex, vorzugsweise von 4 bis 10 dtex aufweisen, ausschließlich durch Wasserstrahlen verfestigt und derart innig miteinander verbunden werden, dass die ursprüngliche mehrlagige Struktur verloren geht und das Vlieskomposit Poren mit einem Durchmesser von 0,2 mm bis 0,4 mm aufweist, wobei die Messung der Porengröße mittels eines Siebtestgeräts AA200 control der Firma Retsch wie folgt durchgeführt wird:
- das Vlieskomposit wird eingespannt bzw. einem Sieb aufgelegt
- 5 g Glaskügelchen eines vorgegebenen Durchmessers werden auf das eingespannte Vlieskomposit gegeben
- das Vlieskomposit wird über einen Zeitraum von 3 min mit einer Schwingungsamplitude von 2 mm zum Schwingen gebracht
- anschließend wird geprüft, ob Glaskügelchen durch das Vlieskomposit gerieselt sind, wobei das Vlieskomposit Poren mit einer Porengröße aufweist, welche zumindest dem Durchmesser der Glaskügelchen entsprechen, wenn eine Menge von mindestens 1,5 % der Einwaage durch das Vlieskomposit hindurchtritt, wobei die größte Pore durch die größte durchgesiebte Glaskugel angezeigt wird.

Es kann zweckmäßig sein, wenn die zweite Lage neben den einen gekräuselten Stapelfasern zusätzlich andere gekräuselte Stapelfasern mit einer Feinheit von 1,2 bis 2,1 dtex enthalten, wobei die gekräuselten Stapelfasern aus einem Gemisch von 20 bis 99 Gew.-% der einen Stapelfasern und 1 bis 80 Gew.-% der anderen Stapelfasern bestehen.

Es kann vorteilhaft sein, wenn während der Wasserstrahlverfestigung ein Relief mit diskreten erhabenen Stellen eingeprägt wird.

Es kann vorteilhaft sein, wenn nach der Wasserstrahlverfestigung eine zusätzliche Prägung mittels Thermo- und/oder Ultraschallkalander durchgeführt wird.

Es kann zweckmäßig sein, wenn die Endlosfilamente und/oder die gekräuselten Stapelfasern in einem Inlineprozess der Wasserstrahlverfestigung zugeführt werden.

Es kann vorteilhaft sein, wenn die Lage aus Endlosfilamenten und/oder die Lage aus gekräuselten Stapelfasern leicht vorverfestigt werden.

Es kann vorteilhaft sein, wenn die Lage aus Endlosfilamenten und/oder die Lage aus gekräuselten Stapelfasern in einem Offlineprozess der Wasserstrahlverfestigung zugeführt werden.

Es kann zweckmäßig sein, wenn die leicht vorverfestigten Lagen getrennt voneinander hergestellt und dann der Wasserstrahlverfestigung zugeführt werden.

Es kann vorteilhaft sein, wenn mindestens eine zusätzliche Lage von Endlosfilamenten und/oder Stapelfasern der Wasserstrahlverfestigung zugeführt wird.

Weitere vorteilhafte Ausgestaltungen der Erfindung können sich auch aus den nachfolgend erläuterten Ausführungsbeispielen ergeben, die in der Zeichnung dargestellt sind. In dieser zeigen:
- Fig. 1: schematisch eine Inline-Produktionslinie zur Herstellung eines erfindungsgemäßen voluminösen Vlieskomposits,
- Fig. 2: schematisch eine Offline-Produktionslinie zur Herstellung eines erfindungsgemäßen voluminösen Vlieskomposits,
- Fig. 3: schematisch in Draufsicht die Rückseite einer Windel mit erfindungsgemäßem voluminösen Vlieskomposit,
- Fig.4: schematisch im Querschnitt ein erfindungsgemäßes voluminöses Vlieskomposit mit eingeprägtem Relief,
- Fig. 5: schematisch im Querschnitt eine Windel mit erfindungsgemäßem voluminösen Vlieskomposit,
- Fig. 6: schematisch im Querschnitt eine Windel mit erfindungsgemäßem voluminösen Vlieskomposit,
- Fig. 7: mikroskopisch eine 8fache Vergrößerung eines erfindungsgemäßen voluminösen Vlieskomposits und
- Fig. 8: mikroskopisch eine 8fache Vergrößerung eines Spinnvlieses nach dem Stand der Technik.

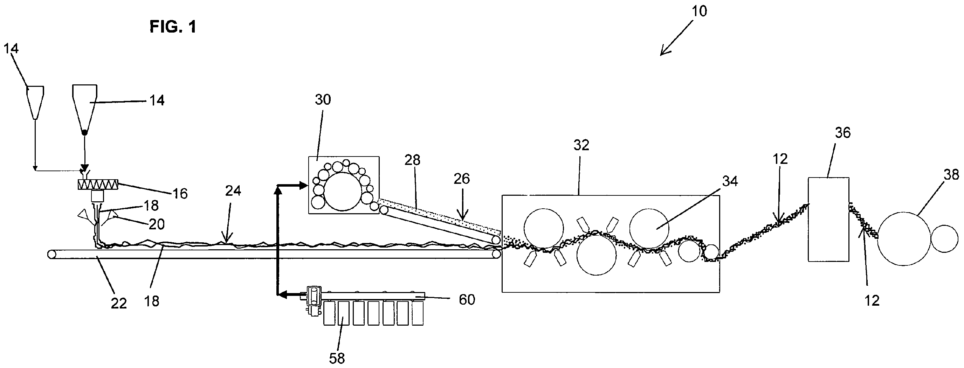

Fig. 1 zeigt schematisch eine Inline-Produktionslinie 10 zur Herstellung eines erfindungsgemäßen voluminösen Vlieskomposits 12.

Am Anfang des Verfahrens zur Herstellung des voluminösen Vlieskomposits 12 wird thermoplastisches Rohmaterial den Extrudern 14 zugeführt, aufgeschmolzen und durch eine Düsenplatte 16 gepresst. Die heißen Filamente 18 werden mit Blasluft 20 verstreckt, gekühlt und als Endlosfilamente 18 auf das Transportband 22 abgelegt.

Auf diese Spinnvlieslage 24 wird eine Lage 26 aus kardierten Stapelfasern 28 gelegt.

Dazu werden Stapelfasern 28 in Ballenform 58 mit Hilfe eines Ballenöffners 60 zu einer Karde bzw. Kardiereinrichtung 30 transportiert. Dort wird eine gleichmäßige Vlieslage 26 aus Stapelfasern 28 erzeugt, die 26 ohne Kompaktierung auf die vorgenannte Spinnvlieslage 24 aufgebracht wird.

In der anschließenden Wasserstrahlverfestigung bzw. -vernadelung 32 werden die Lagen 24, 26 innig miteinander verbunden, so dass die zweilagige Struktur verloren geht und ein annähernd homogenes voluminöses Vlies bzw. Vlieskomposit 12 entsteht.

Im letzten Schritt der Wasserstrahlvernadelung bzw. -verfestigung 32 kann mit Hilfe einer mit einem Relief versehenen Trommel 34 eine Prägung in das Vlieskomposit 12 eingebracht werden.

Anschließend wird das Vlieskomposit 12 in einem Trockner 36 getrocknet und mit einem Wickler 38 zu Rollen aufgewickelt.

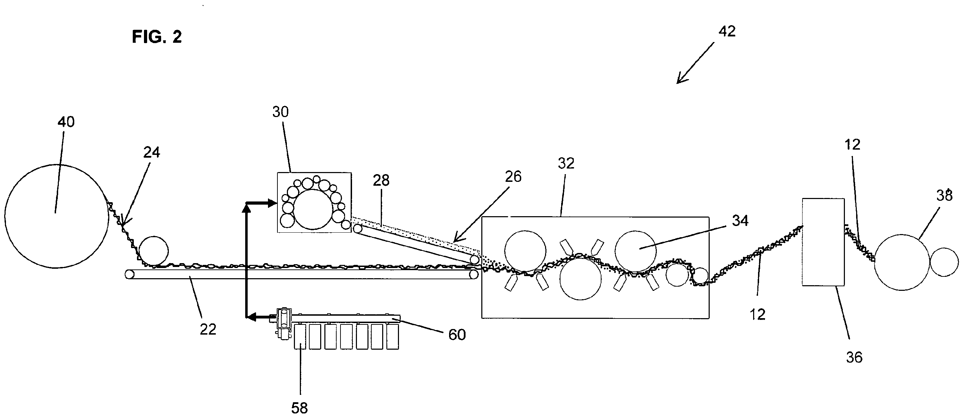

Fig. 2 zeigt schematisch eine Offline-Produktionslinie 42 zur Herstellung eines erfindungsgemäßen voluminösen Vlieskomposits.

Hierbei wird eine leicht vorverfestigte Spinnvlieslage 24 spannungsfrei von einer Rolle 40 abgerollt und auf ein Transportband 22 abgelegt. Auf die Spinnvlieslage 24 wird eine Lage 26 aus kardierten Stapelfasern 28 gelegt.

Dazu werden Stapelfasern 28 in Ballenform mit Hilfe eines Ballenöffners zu einer Karde bzw. Kardiereinrichtung 30 transportiert. Dort wird ein gleichmäßiges Vlies bzw. eine gleichmäßige Vlieslage 26 erzeugt, das bzw. die 26 ohne Kompaktierung auf die leicht vorverfestigte Spinnvlieslage 24 aufgelegt wird.

In der anschließenden Wasserstrahlverfestigung bzw. -vernadelung 32 werden die Lagen 24, 26 innig miteinander verbunden, so dass die zweilagige Struktur verloren geht und ein annähernd homogenes voluminöses Vlies bzw. Vlieskomposit 12 entsteht.

Im letzten Schritt der Wasserstrahlvernadelung bzw. -verfestigung 32 kann mit Hilfe einer reliefierten Trommel 34 eine Prägung in das Vlieskomposit 12 eingebracht werden.

Anschließend wird das Vlieskomposit 12 in einem Trockner 36 getrocknet und mit einem Wickler 38 zu Rollen aufgewickelt.

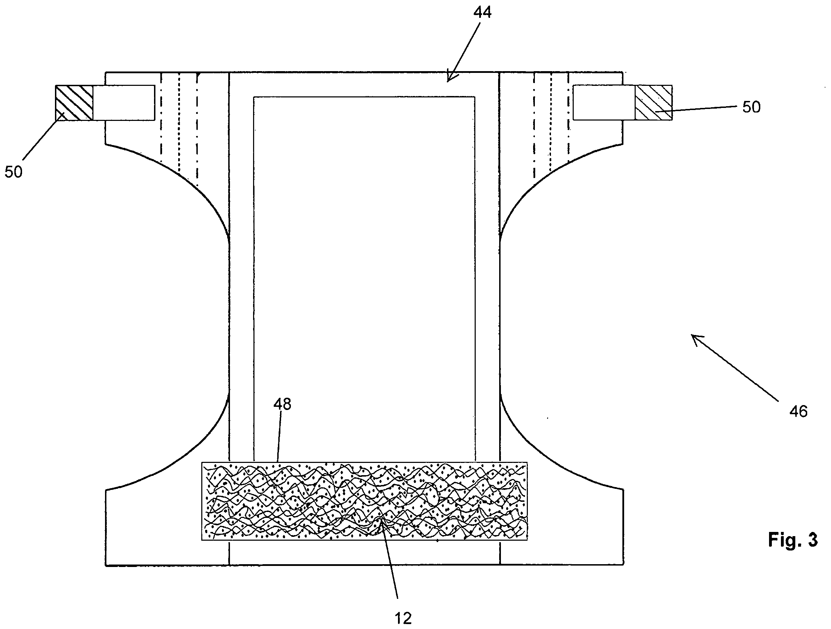

Fig. 3 zeigt eine Draufsicht auf die Rückseite 44 einer Windel 46, auf der das erfindungsgemäße voluminöse Vlieskomposit 12 aufgebracht ist und als so genannte "Landing Zone" 48 eines Klettverschlusses dient. Dargestellt sind zudem die zum Klettverschluss gehörenden Haken aufweisenden Klettbänder 50.

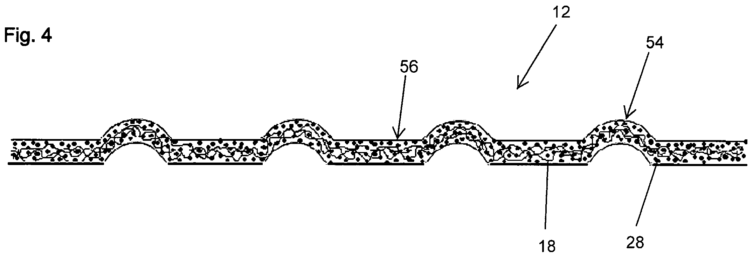

Fig. 4 zeigt ein erfindungsgemäßes voluminöses Vlieskomposit 12, in das bei der Wasserstrahlverfestigung 32 ein Relief 52 eingeprägt ist. Diese Berg- 54 und Talstruktur 56 erlaubt es den Haken des Klettbandes 50 eines Klettverschlusses sich besonders gut mit dem voluminösen Vlieskomposit 12 zu verhaken.

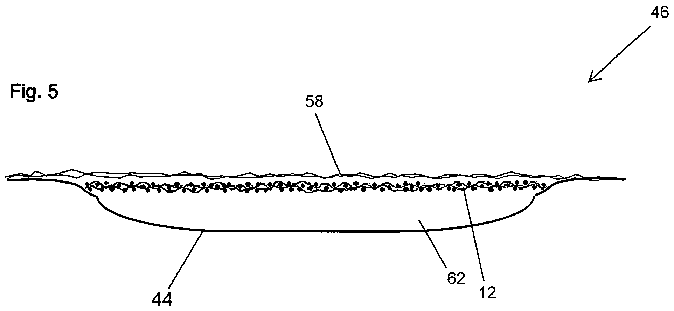

Fig. 5 zeigt schematisch im Querschnitt eine Windel 46 mit einem Abdeckvlies 58 bzw. Topsheet Spinnvlies und einem darunter angeordneten, erfindungsgemäßen voluminösen Vlieskomposit 12, das als so genannte "Aquisition Layer" fungiert und einem Saugkörper 62 der Windel 46 aufliegt. Die großporige Struktur des erfindungsgemäßen Vlieskomposits 12 erlaubt hierbei einen schnellen Eintritt von Flüssigkeit.

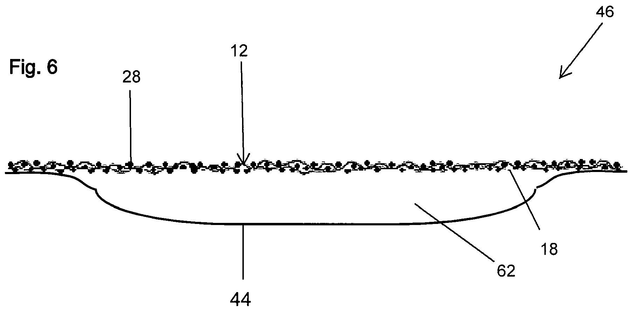

Fig. 6 zeigt schließlich schematisch im Querschnitt eine Windel 46 mit einem Abdeckvlies 58 aus einem erfindungsgemäßen voluminösen Vlieskomposit 12, das die Funktion eines so genannten "Topsheets" mit integriertem so genannten "Aquisition Layer" erfüllt. Der Vorteil einer solchen Anwendung besteht darin, dass nicht zwei getrennte Vlieslagen, wie in Fig. 5 beschrieben, eingesetzt werden müssen.

Im Nachfolgenden wird ein erfindungsgemäßes voluminöses Vlieskomposit SC40 im Vergleich mit einem bekannten Spinnvlies S40 erläutert.

Das Vlieskomposit SC40 wird in einem Inline-Verfahren - entsprechend Fig. 1 - hergestellt und weist ein Flächengewicht von 40 g/m² auf, umfassend eine erste Lage mit einem Flächengewicht von 25 g/m² aus wirr abgelegten schmelzegesponnenen Endlosfilamenten aus Polypropylen, die eine Feinheit von 1,2 dtex aufweisen, und eine zweite Lage mit einem Flächengewicht von 15 g/m² aus einem Gemisch von gekräuselten Stapelfasern, wobei das Gemisch 65 Gew.-% gekräuselter Stapelfasern aus Polyester mit einer Feinheit von 1,7 dtex und 35 Gew.-% gekräuselter Stapelfasern aus Polypropylen mit einer Feinheit von 6,6 dtex aufweisen. Die Länge der Stapelfasern beträgt 4 cm. Die Lagen sind zur Ausbildung des voluminösen Vlieskomposits ausschließlich durch Wasserstrahlen verfestigt und innig miteinander verbunden.

Das nur eine Lage mit einem Flächengewicht von 40 g/m² umfassende Spinnvlies S40 weist wirr abgelegte schmelzegesponnene Endlosfilamenten aus Polypropylen mit einer Feinheit von 1,2 dtex auf, wobei die Lage mittels Thermokalander geprägt ist.

Dadurch, dass das Gemisch aus gekräuselten Stapelfasern 35 Gew.-% gekräuselter Stapelfasern mit einer Feinheit von 6,6 dtex aufweist, wobei - wie in Fig. 1 dargestellt - vorteilhaft keine Kompaktierung vor der Wasserstrahlvernadelung erfolgt, wird eine große Dicke und geringe Dichte des fertigen voluminösen Vlieskomposits erhalten.

In Tabelle 1 sind verschiedene mechanische Eigenschaften des erfindungsgemäßen voluminösen Vlieskomposits SC40 und des Spinnvlieses S40 aufgelistet.

**Tab. 1**

| **Technische Eigenschaften** | **voluminöses Composit** | **Spinnvlies** | **Testmethode** |
|---|---|---|---|
| **Flächengewicht [g/m²]** | 40 | 40 | WSP 130.1(09) |
| **Dicke [mm]** | 0,6 | 0,34 | WSP120.1(09) |
| **Dichte [g/cm³]** | 0,07 | 0,12 | mathematisch |
| **Luftdurchlässigkeit** [m**³/m²/min]** | 180 | 96 | WSP70.1 (08) |
| **Größte Pore aus bubble point Messung [µm]** | ≥200 (= außerhalb des Messbereichs von <200 µm) | 63 | Porosimeter |
| **Durchtritt Kugelgröße 0,35mm [% der Einwaage]** | 6,6 | 0 | Siebtest |
| **Anzahl Poren > 0,2mm/cm²** | 12 | 0 | mikroskopisch |
| **Reißfestigkeit Querrichtung [N/5cm]** | 50 | 65 | WSP 110.4(09) |
| **Reißdehnung Querrichtung [%]** | 180 | 95 | WSP 110.4(09) |
| **Dehnung Querrichtung bei 10N [%]** | 40 | 5 | WSP 110.4(09) |

Die in Tabelle 1 dargestellten Messwerte für die Dicke, Dichte, Porengröße, den Siebtest und die Luftdurchlässigkeit zeigen, dass das erfindungsgemäße voluminöse

Vlieskomposit SC40 gegenüber dem Spinnvlies S40 bei gleichem Flächengewicht deutlich offener und voluminöser ist.

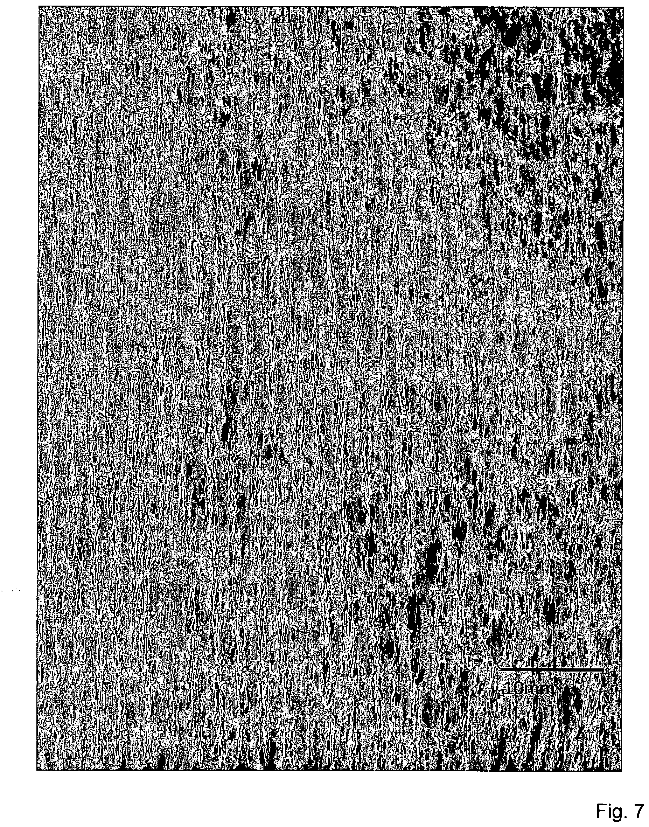

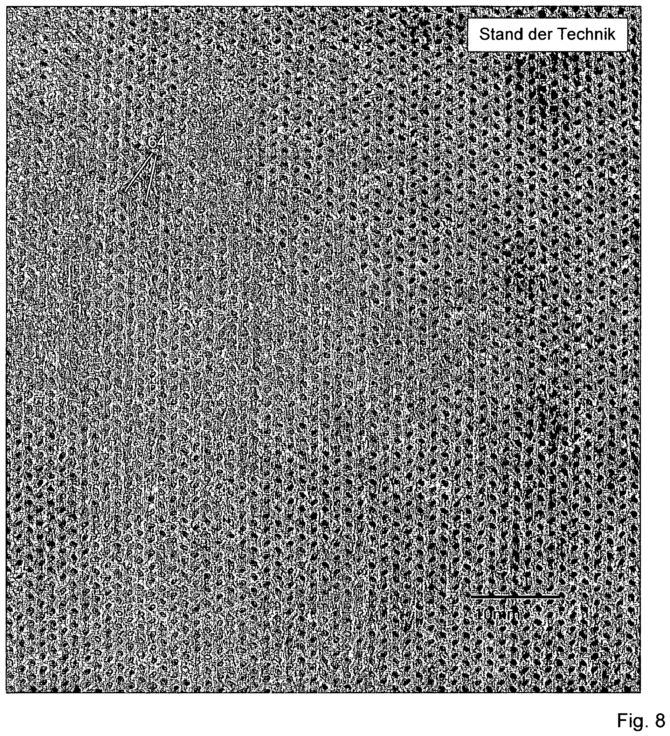

Fig. 7 und 8 zeigen zur Verdeutlichung der unterschiedlichen Porositäten zwei mikroskopisch um das 8fache vergrößerte Bilder des voluminösen Vlieskomposits SC40 und des Spinnvlieses S40. Das voluminöse Vlieskomposit SC40 gemäß Fig. 7 zeigt eine ersichtlich höhere Porosität in Form des schwarz durchscheinenden Hintergrunds als das Spinnvlieses S40 gemäß Fig. 8. Bei den in Fig. 8 dargestellten schwarzen Ovalen des Spinnvlieses S40 handelt es sich nicht um Poren, sondern um thermische Prägepunkte 64.

Auch die mechanischen Eigenschaften des voluminösen Vlieskomposits SC40 unterscheiden sich deutlich von denen des Spinnvlieses S40. So ist die Reißkraft des voluminösen Vlieskomposits SC40 geringer und die Dehnung wesentlich höher als die des Spinnvlieses S40. Diese fehlende Dimensionsstabilität ist für die genannten Einsatzbereiche aber von Vorteil. Wie in Fig. 3 dargestellt bildet das voluminöse Vlieskomposit SC40 bei einer Windel als so genannte "Landing Zone" 48 das Schlaufen aufweisende Gegenstück zum Haken aufweisenden Teil eines Klettverschlusses. Wie in Fig. 5 dargestellt wird das voluminöse Vlieskomposit SC40 bei einer Windel auch als so genannte "Aquisition Layer" 12 eingesetzt, ist somit zwischen Saugkörper 62 und Abdeckvlies 58 angeordnet und ist dadurch keiner mechanischen Belastung ausgesetzt.

Das erfindungsgemäße voluminöse Vlieskomposit unterscheidet sich somit in diversen technischen Eigenschaften grundlegend von einem Spinnvlies und entsprechend auch von solchen Vlieskomposits aus Endlosfilamenten und Stapelfasern, die u.a. wasserstrahlvernadelt die gleichen technischen Eigenschaften aufweisen sollen wie ein Spinnvlies.

### Bezugszeichenliste

### (ist Teil der Beschreibung)

- 10: Inline-Produktionslinie
- 12: Vlieskomposit
- 14: Extruder
- 16: Düsenplatte bzw. Spinnbalken mit Düsenpaket
- 18: Filamente bzw. Endlosfilamente
- 20: Blasluft
- 22: Transportband
- 24: Spinnvlieslage
- 26: Lage aus Stapelfasern 28
- 28: Stapelfaser
- 30: Karde bzw. Kardiereinrichtung
- 32: Wasserstrahlverfestigung bzw. -vernadelung
- 34: reliefierte Trommel
- 36: Trockner
- 38: Wickler
- 40: Rolle
- 42: Offline- Produktionslinie
- 44: Rückseite einer Windel 46
- 46: Windel
- 48: Landing Zone
- 50: Klettband mit Haken
- 52: Relief
- 54: Bergstruktur
- 56: Talstruktur
- 58: Ballenform bzw. Faserballen (sortenrein oder in Mischung)
- 60: Ballenöffner bzw. Faserballenöffner (Blendomat)
- 62: Saugkörper
- 64: Prägepunkte

## Patentansprüche

1. Voluminöses Vlieskomposit, hergestellt aus einer ersten Lage wirr abgelegter schmelzegesponnener Endlosfilamente und einer zweiten Lage gekräuselter Stapelfasern, **dadurch gekennzeichnet, dass**
a) die Endlosfilamente eine Feinheit von 0,8 bis 1,8 dtex, vorzugsweise von ≤ 1,3 dtex, besonders bevorzugt von 1,0 bis 1,2 dtex aufweisen
b) die gekräuselten Stapelfasern eine Feinheit von 2,2 bis 15 dtex, vorzugsweise von 4 bis 10 dtex aufweisen
c) die Lagen zur Ausbildung des voluminösen Vlieskomposits ausschließlich durch Wasserstrahlen verfestigt und derart innig miteinander verbunden sind, dass die ursprüngliche mehrlagige Struktur verloren geht,
wobei das Vlieskomposit Poren mit einem Durchmesser von 0,2 mm bis 0,4 mm aufweist,
wobei die Messung der Porengröße mittels eines Siebtestgeräts AA200 control der Firma Retsch wie folgt durchgeführt wird:
• das Vlieskomposit wird eingespannt bzw. einem Sieb aufgelegt
• 5 g Glaskügelchen eines vorgegebenen Durchmessers werden auf das eingespannte Vlieskomposit gegeben
• das Vlieskomposit wird über einen Zeitraum von 3 min mit einer Schwingungsamplitude von 2 mm zum Schwingen gebracht
• anschließend wird geprüft, ob Glaskügelchen durch das Vlieskomposit gerieselt sind, wobei das Vlieskomposit Poren mit einer Porengröße aufweist, welche zumindest dem Durchmesser der Glaskügelchen entsprechen, wenn eine Menge von mindestens 1,5 % der Einwaage durch das Vlieskomposit hindurchtritt, wobei die größte Pore durch die größte durchgesiebte Glaskugel angezeigt wird.

2. Vlieskomposit nach Anspruch 1, **dadurch gekennzeichnet, dass** die zweite Lage neben den einen gekräuselten Stapelfasern zusätzlich andere gekräuselte Stapelfasern mit einer Feinheit von 1,2 bis 2,1 dtex enthält, wobei die gekräuselten Stapelfasern aus einem Gemisch von 20 bis 99 Gew.-% der einen Stapelfasern und 1 bis 80 Gew.-% der anderen Stapelfasern bestehen.

3. Vlieskomposit nach Anspruch 1 oder 2, **dadurch gekennzeichnet, dass** die Stapelfasern eine Länge von ≥ 2,5 cm, vorzugsweise bis 10 cm, besonders bevorzugt bis 5 cm aufweisen.

4. Vlieskomposit nach einem der Ansprüche 1 bis 3, **dadurch gekennzeichnet, dass** die Dichte des Vlieskomposits ≤ 0,1 g/cm³, vorzugsweise 0,04 bis 0,1 g/cm³, beträgt.

5. Vlieskomposit nach einem der Ansprüche 1 bis 4, **dadurch gekennzeichnet, dass** dieses ein Flächengewicht von 18 bis 80 g/m² aufweist, wobei der Gewichtsanteil der Endlosfilamente vorzugsweise 10 bis 70 % beträgt und der Gewichtsanteil der gekräuselten Stapelfasern vorzugsweise 30 bis 90 % beträgt.

6. Vlieskomposit nach einem der Ansprüche 1 bis 5, **dadurch gekennzeichnet, dass** dieses ein Relief mit diskreten erhabenen Stellen aufweist, welche während der Wasserstrahlverfestigung einprägbar sind.

7. Vlieskomposit nach einem der Ansprüche1 bis 6, **dadurch gekennzeichnet, dass** dieses eine zusätzliche Prägung aufweist, die mittels Thermo- und/oder Ultraschallkalander, vorzugsweise nach der Wasserstrahlverfestigung, einbringbar ist.

8. Vlieskomposit nach einem der Ansprüche 1 bis 7, **dadurch gekennzeichnet, dass** mindestens eine zusätzliche Lage von Endlosfilamenten und/oder Stapelfasern der Wasserstrahlverfestigung zuführbar ist.

9. Vlieskomposit nach einem der Ansprüche 1 bis 8, **dadurch gekennzeichnet, dass** die Endlosfilamente aus Monofilamenten oder Bikomponentenfilamenten aus Polypropylen, Polyethylen, Polyester, Polylactid oder deren Copolymere bestehen.

10. Vlieskomposit nach einem der Ansprüche 1 bis 9, **dadurch gekennzeichnet, dass** die Stapelfasern aus Viskose oder Baumwolle oder aus monokomponentigen oder bikomponentigen Fasern aus Polypropylen, Polyethylen, Polyester, Polyamid, Polylactid oder deren Copolymere bestehen.

11. Vlieskomposit nach Ansprüche 1 bis 10, **dadurch gekennzeichnet, dass** die einen gekräuselten Stapelfasern aus einem Material, vorzugsweise Polypropylen, und die anderen gekräuselten Stapelfasern aus einem sich davon unterscheidenden Material, vorzugsweise Polyester, bestehen.

12. Vlieskomposit nach einem der Ansprüche 1 bis 11, **dadurch gekennzeichnet, dass** zumindest einige der Endlosfilamente und/oder zumindest einige der Stapelfasern einen nicht runden Querschnitt aufweisen und/oder hohl sind.

13. Verfahren zur Herstellung eines voluminösen Vlieskomposits, bei welchem eine erste Lage wirr abgelegter schmelzegesponnener Endlosfilamente, die eine Feinheit von 0,8 bis 1,8 dtex, vorzugsweise von ≤ 1,3 dtex, besonders bevorzugt von 1,0 bis 1,2 dtex aufweisen, mit einer zweiten Lage aus gekräuselten Stapelfasern, die eine Feinheit von 2,2 bis 15 dtex, vorzugsweise von 4 bis 10 dtex aufweisen,
ausschließlich durch Wasserstrahlen verfestigt und derart innig miteinander verbunden werden, dass die ursprüngliche mehrlagige Struktur verloren geht und das Vlieskomposit Poren mit einem Durchmesser von 0,2 mm bis 0,4 mm aufweist,
wobei die Messung der Porengröße mittels eines Siebtestgeräts AA200 control der Firma Retsch wie folgt durchgeführt wird:
• das Vlieskomposit wird eingespannt bzw. einem Sieb aufgelegt
• 5 g Glaskügelchen eines vorgegebenen Durchmessers werden auf das eingespannte Vlieskomposit gegeben
• das Vlieskomposit wird über einen Zeitraum von 3 min mit einer Schwingungsamplitude von 2 mm zum Schwingen gebracht
• anschließend wird geprüft, ob Glaskügelchen durch das Vlieskomposit gerieselt sind, wobei das Vlieskomposit Poren mit einer Porengröße aufweist, welche zumindest dem Durchmesser der Glaskügelchen entsprechen, wenn eine Menge von mindestens 1,5 % der Einwaage durch das Vlieskomposit hindurchtritt, wobei die größte Pore durch die größte durchgesiebte Glaskugel angezeigt wird.

14. Verfahren nach Anspruch 13, **dadurch gekennzeichnet, dass** die zweite Lage neben den einen gekräuselten Stapelfasern zusätzlich andere gekräuselte Stapelfasern mit einer Feinheit von 1,2 bis 2,1 dtex enthalten, wobei die gekräuselten Stapelfasern aus einem Gemisch von 20 bis 99 Gew.-% der einen Stapelfasern und 1 bis 80 Gew.-% der anderen Stapelfasern bestehen.

15. Verfahren nach Anspruch 13 oder 14, **dadurch gekennzeichnet, dass** während der Wasserstrahlverfestigung ein Relief mit diskreten erhabenen Stellen eingeprägt werden.

16. Verfahren nach einem der Ansprüche 13 bis 15, **dadurch gekennzeichnet, dass** nach der Wasserstrahlverfestigung eine zusätzliche Prägung mittels Thermo- und/oder Ultraschallkalander durchgeführt wird.

17. Verfahren nach einem der Ansprüche 13 bis 16, **dadurch gekennzeichnet, dass** die Endlosfilamente und/oder die gekräuselten Stapelfasern in einem Inlineprozess der Wasserstrahlverfestigung zugeführt werden.

18. Verfahren nach einem der Ansprüche 13 bis 17, **dadurch gekennzeichnet, dass** die Lage aus Endlosfilamenten und/oder die Lage aus gekräuselten Stapelfasern leicht vorverfestigt wird.

19. Verfahren nach einem der Ansprüche 13 bis 16 oder 18, **dadurch gekennzeichnet, dass** die Lage aus Endlosfilamenten und/oder die Lage aus gekräuselten Stapelfasern in einem Offlineprozess der Wasserstrahlverfestigung zugeführt werden.

20. Verfahren nach Anspruch 18, **dadurch gekennzeichnet, dass** die leicht vorverfestigten Lagen getrennt voneinander hergestellt und dann der Wasserstrahlverfestigung zugeführt werden.

21. Verfahren nach einem der Ansprüche 13 bis 20, **dadurch gekennzeichnet, dass** mindestens eine zusätzliche Lage von Endlosfilamenten und/oder Stapelfasern der Wasserstrahlverfestigung zugeführt wird.

## Claims

1. Voluminous non-woven composite produced from a first tier of randomly deposited melt-spun continuous filaments and from a second tier of crimped staple fibres, **characterized in that**
a) the continuous filaments have a linear density of 0.8 to 1.8 dtex, preferably of ≤ 1.3 dtex, particularly preferably of 1.0 to 1.2 dtex;
b) the crimped staple fibres have a linear density of 2.2 to 15 dtex, preferably of 4 to 10 dtex;
c) the tiers for configuring the voluminous non-woven composite are exclusively hydroentangled and are inherently connected to one another in such a manner that the original multi-tier structure is lost;
wherein the non-woven composite has pores having a diameter of 0.2 mm to 0.4 mm;
wherein the measuring of the pore size by means of a sieve testing apparatus AA200 by the Retsch company is carried out as follows:
• the non-woven composite is clamped in, or placed onto, a sieve, respectively;
• 5 g of glass spheres of a predefined diameter are placed onto the clamped non-woven composite;
• the non-woven composite is made to vibrate at a vibration amplitude of 2 mm for a duration of 3 min;
• it is subsequently checked whether glass spheres have travelled through the non-woven composite, wherein the non-woven composite has pores of a pore size which correspond to at least the diameter of the glass spheres when a quantity of at least 1.5% by weight passes through the non-woven composite, wherein the largest pore is indicated by the largest penetrating glass sphere.

2. Non-woven composite according to Claim 1, **characterized in that** the second tier, apart from the one crimped staple fibres, additionally contains other crimped staple fibres having a linear density of 1.2 to 2.1 dtex, wherein the crimped staple fibres are composed of a mixture of 20 to 99% by weight of the one staple fibre and 1 to 80% by weight of the other staple fibre.

3. Non-woven composite according to Claim 1 or 2, **characterized in that** the staple fibres have a length of ≥ 2.5 cm, preferably up to 10 cm, particularly preferably up to 5 cm.

4. Non-woven composite according to one of Claims 1 to 3, **characterized in that** the density of the non-woven composite is ≤ 0.1 g/cm³, preferably 0.04 to 0.1 g/cm³.

5. Non-woven composite according to one of Claims 1 to 4, **characterized in that** said non-woven composite has an area weight of 18 to 80 g/m², wherein the proportion by weight of the continuous filaments is preferably 10 to 70% and the proportion by weight of the crimped staple fibres is preferably 30 to 90%.

6. Non-woven composite according to one of Claims 1 to 5, **characterized in that** said non-woven composite has a relief with discrete proud patches which are able to be embossed during the hydroentanglement.

7. Non-woven composite according to one of Claims 1 to 6, **characterized in that** said non-woven composite has an additional embossing which is able to be incorporated by means of thermal calendaring and/or ultrasonic calendaring, preferably after the hydroentanglement.

8. Non-woven composite according to one of Claims 1 to 7, **characterized in that** at least one further tier of continuous filaments and/or staple fibres is able to be fed.

9. Non-woven composite according to one of Claims 1 to 8, **characterized in that** the continuous filaments are composed of monofilaments or bi-component filaments of polypropylene, polyethylene, polyester, polylactic acid, or copolymers thereof.

10. Non-woven composite according to one of Claims 1 to 9, **characterized in that** the staple fibres are composed of viscose or cotton, or from mono-component or bi-component fibres of polypropylene, polyethylene, polyester, polyamide, polylactic acid, or copolymers thereof.

11. Non-woven composite according to Claims 1 to 10, **characterized in that** the one crimped staple fibres are composed of one material, preferably polypropylene, and the other crimped staple fibres are composed of a dissimilar material, preferably polyester.

12. Non-woven composite according to one of Claims 1 to 11, **characterized in that** at least some of the continuous filaments and/or at least some of the staple fibres have a cross section that is not round and/or are hollow.

13. Method for producing a voluminous non-woven composite, in which method a first tier from randomly deposited melt-spun continuous filaments which have a linear density of 0.8 to 1.8 dtex, preferably of ≤ 1.3 dtex, particularly of 1.0 to 1.2 dtex, and a second tier from crimped staple fibres which have a linear density of 2.2 to 15 dtex, preferably of 4 to 10 dtex, are exclusively hydroentangled and are inherently connected to one another in such a manner that the original structure is lost and the non-woven composite has pores having a diameter of 0.2 mm to 0.4 mm,
wherein the measuring of the pore size by means of a sieve testing apparatus AA200 by the Retsch company is carried out as follows:
• the non-woven composite is clamped in, or placed onto, a sieve, respectively;
• 5 g of glass spheres of a predefined diameter are placed onto the clamped non-woven composite;
• the non-woven composite is made to vibrate at a vibration amplitude of 2 mm for a duration of 3 min;
• it is subsequently checked whether glass spheres have travelled through the non-woven composite, wherein the non-woven composite has pores of a pore size which correspond to at least the diameter of the glass spheres when a quantity of at least 1.5% by weight passes through the non-woven composite, wherein the largest pore is indicated by the largest penetrating glass sphere.

14. Method according to Claim 13, **characterized in that** the second tier, apart from the one crimped staple fibres, additionally contains other crimped staple fibres having a linear density of 1.2 to 2.1 dtex, wherein the crimped staple fibres are composed of a mixture of 20 to 99% by weight of the one staple fibre and 1 to 80% by weight of the other staple fibre.

15. Method according to Claim 13 or 14, **characterized in that** a relief with discrete proud patches is embossed during the hydroentanglement.

16. Method according to one of Claims 13 to 15, **characterized in that** an additional embossing by means of thermal calendaring and/or ultrasonic calendaring is carried out after the hydroentanglement.

17. Method according to one of Claims 13 to 16, **characterized in that** the continuous filaments and/or the crimped staple fibres are fed to the hydroentanglement in an inline process.

18. Method according to one of Claims 13 to 17, **characterized in that** the tier from continuous filaments and/or the tier from crimped staple fibres is slightly pre-consolidated.

19. Method according to one of Claims 13 to 16 or 18, **characterized in that** the tier from continuous filaments and/or the tier from crimped staple fibres are fed to the hydroentanglement in an offline process.

20. Method according to Claim 18, **characterized in that** the slightly pre-consolidated tiers are produced separately and then fed to the hydroentanglement.

21. Method according to one of Claims 13 to 20, **characterized in that** at least one addition tier of continuous filaments and/or staple fibres are/is fed to the hydroentanglement.

## Revendications

1. Composite non-tissé volumineux, fabriqué à partir d'une première couche de filaments sans fin filés à l'état fondu, déposés en désordre, et d'une deuxième couche de fibres discontinues bouclées, **caractérisé en ce que**
a) les filaments sans fin présentent un titre de 0,8 à 1,8 dtex, de préférence de ≤ 1,3 dtex, de manière particulièrement préférée de 1,0 à 1,2 dtex,
b) les fibres discontinues bouclées présentent un titre de 2,2 à 15 dtex, de préférence de 4 à 10 dtex,
c) les couches pour la formation du composite non-tissé volumineux sont consolidées exclusivement par des jets d'eau et ainsi reliées intimement les unes avec les autres, de telle sorte que la structure multicouche initiale soit perdue,
le composite non-tissé présentant des pores d'un diamètre de 0,2 mm à 0,4 mm,
la mesure de la taille de pore étant réalisée au moyen d'un appareil de criblage AA200 control de la société Retsch de la manière suivante :
- le composite non-tissé est tendu ou déposé sur un tamis,
- 5 g de billes de verre d'un diamètre prédéterminé sont placées sur le composite non-tissé tendu,
- le composite non-tissé est mis en oscillation pendant une durée de 3 minutes avec une amplitude d'oscillation de 2 mm,
- puis il est évalué si des billes de verre ont ruisselé au travers du composite non-tissé, le composite non-tissé comprenant des pores ayant une taille de pore qui correspond au moins au diamètre des billes de verre lorsqu'une quantité d'au moins 1,5 % de la pesée a traversé le composite non-tissé, le plus grand pore étant indiqué par la plus grande bille de verre tamisée.

2. Composite non-tissé selon la revendication 1, **caractérisé en ce que** la deuxième couche contient en plus des fibres discontinues bouclées également d'autres fibres discontinues bouclées ayant un titre de 1,2 à 2,1 dtex, les fibres discontinues bouclées étant constituées par un mélange de 20 à 99 % en poids des fibres discontinues et 1 à 80 % en poids des autres fibres discontinues.

3. Composite non-tissé selon la revendication 1 ou 2, **caractérisé en ce que** les fibres discontinues présentent une longueur de ≥ 2,5 cm, de préférence de jusqu'à 10 cm, de manière particulièrement préférée de jusqu'à 5 cm.

4. Composite non-tissé selon l'une quelconque des revendications 1 à 3, **caractérisé en ce que** la densité du composite non tissé est ≤ 0,1 g/cm³, de préférence de 0,04 à 0,1 g/cm³.

5. Composite non-tissé selon l'une quelconque des revendications 1 à 4, **caractérisé en ce que** celui-ci présente un poids surfacique de 18 à 80 g/m², la proportion en poids des filaments sans fin étant de préférence de 10 à 70 % et la proportion en poids des fibres discontinues bouclées étant de préférence de 30 à 90 %.

6. Composite non-tissé selon l'une quelconque des revendications 1 à 5, **caractérisé en ce que** celui-ci présente un relief avec des emplacements soulevés discrets, qui peuvent être gaufrés pendant la consolidation par jet d'eau.

7. Composite non-tissé selon l'une quelconque des revendications 1 à 6, **caractérisé en ce que** celui-ci présente un gaufrage supplémentaire, qui peut être introduit au moyen d'une calandre thermique et/ou ultrasonore, de préférence après la consolidation par jet d'eau.

8. Composite non-tissé selon l'une quelconque des revendications 1 à 7, **caractérisé en ce qu'**au moins une couche supplémentaire de filaments sans fin et/ou de fibres discontinues peut être introduite dans la consolidation par jet d'eau.

9. Composite non-tissé selon l'une quelconque des revendications 1 à 8, **caractérisé en ce que** les filaments sans fin sont constitués par des monofilaments ou des filaments bicomposants de polypropylène, polyéthylène, polyester, polylactide ou leurs copolymères.

10. Composite non-tissé selon l'une quelconque des revendications 1 à 9, **caractérisé en ce que** les fibres discontinues sont constituées par de la viscose ou du coton ou par des fibres monocomposantes ou bicomposantes de polypropylène, polyéthylène, polyester, polyamide, polylactide ou leurs copolymères.

11. Composite non-tissé selon l'une quelconque des revendications 1 à 10, **caractérisé en ce que** les fibres discontinues bouclées sont constituées par un matériau, de préférence du polypropylène, et les autres fibres discontinues bouclées sont constituées par un matériau différent de celui-ci, de préférence du polyester.

12. Composite non-tissé selon l'une quelconque des revendications 1 à 11, **caractérisé en ce qu'**au moins certains des filaments sans fin et/ou au moins certaines des fibres discontinues présentent une section transversale non ronde et/ou sont creux.

13. Procédé de fabrication d'un composite non-tissé volumineux, selon lequel une première couche de filaments sans fin filés à l'état fondu, déposés en désordre, qui présentent un titre de 0,8 à 1,8 dtex, de préférence de ≤ 1,3 dtex, de manière particulièrement préférée de 1,0 à 1,2 dtex, est consolidée avec une deuxième couche de fibres discontinues bouclées, qui présentent un titre de 2,2 à 15 dtex, de préférence de 4 à 10 dtex, exclusivement par des jets d'eau, et celles-ci sont reliées intimement l'une avec l'autre de telle sorte que la structure multicouche initiale soit perdue et que le composite non-tissé présente des pores d'un diamètre de 0,2 mm à 0,4 mm,
la mesure de la taille de pore étant réalisée au moyen d'un appareil de criblage AA200 control de la société Retsch de la manière suivante :
- le composite non-tissé est tendu ou déposé sur un tamis,
- 5 g de billes de verre d'un diamètre prédéterminé sont placées sur le composite non-tissé tendu,
- le composite non-tissé est mis en oscillation pendant une durée de 3 minutes avec une amplitude d'oscillation de 2 mm,
- puis il est évalué si des billes de verre ont ruisselé au travers du composite non-tissé, le composite non-tissé comprenant des pores ayant une taille de pore qui correspond au moins au diamètre des billes de verre lorsqu'une quantité d'au moins 1,5 % de la pesée a traversé le composite non-tissé, le plus grand pore étant indiqué par la plus grande bille de verre tamisée.

14. Procédé selon la revendication 13, **caractérisé en ce que** la deuxième couche contient en plus des fibres discontinues bouclées également d'autres fibres discontinues bouclées ayant un titre de 1,2 à 2,1 dtex, les fibres discontinues bouclées étant constituées par un mélange de 20 à 99 % en poids des fibres discontinues et 1 à 80 % en poids des autres fibres discontinues.

15. Procédé selon la revendication 13 ou 14, **caractérisé en ce qu'un** relief avec des emplacements soulevés discrets est gaufré pendant la consolidation par jet d'eau.

16. Procédé selon la revendication 13 à 15, **caractérisé en ce qu'**un gaufrage supplémentaire au moyen d'une calandre thermique et/ou ultrasonore est réalisé après la consolidation par jet d'eau.

17. Procédé selon la revendication 13 à 16, **caractérisé en ce que** les filaments sans fin et/ou les fibres discontinues bouclées sont introduites dans la consolidation par jet d'eau dans un processus en ligne.

18. Procédé selon la revendication 13 à 17, **caractérisé en ce que** la couche de filaments sans fin et/ou la couche de fibres discontinues bouclées sont légèrement préconsolidées.

19. Procédé selon la revendication 13 à 16 ou 18, **caractérisé en ce que** la couche de filaments sans fin et/ou la couche de fibres discontinues bouclées sont introduites dans la consolidation par jet d'eau dans un processus hors ligne.

20. Procédé selon la revendication 18, **caractérisé en ce que** les couches légèrement préconsolidées sont fabriquées séparément les unes des autres, puis introduites dans la consolidation par jet d'eau.

21. Procédé selon la revendication 13 à 20, **caractérisé en ce qu'**au moins une couche supplémentaire de filaments sans fin et/ou de fibres discontinues est introduite dans la consolidation par jet d'eau.
